Europäisches Patentamt

European Patent Office

Office européen des brevets

(11) Publication number: **0 066 633**
**B1**

# EUROPEAN PATENT SPECIFICATION

(45) Date of publication of patent specification: **13.11.85**

(21) Application number: **81104300.9**

(22) Date of filing: **04.06.81**

(51) Int. Cl.⁴: **H 01 F 5/06,** H 02 K 3/30,
H 01 F 27/32

(54) **Process for forming a ceramic-like insulation.**

(43) Date of publication of application:
**15.12.82 Bulletin 82/50**

(45) Publication of the grant of the patent:
**13.11.85 Bulletin 85/46**

(84) Designated Contracting States:
**CH DE FR GB IT LI NL SE**

(56) References cited:
**CH-A- 581 401**
**GB-A-2 046 771**

(73) Proprietor: **NIKKISO CO., LTD.**
**No. 43-2, Ebisu 3-chome**
**Shibuya-ku Tokyo (JP)**

(72) Inventor: **Miyazaki, Haruo c/o Yasukawa**
**Electric MFG.**
**CO., LTD. No. 2346, Oaza Fujita Yahatanishi-ku**
**Kitakyushu-shi Fukuoka-ken (JP)**
Inventor: **Yamasaki, Yasuaki c/o Yasukawa**
**Electric MFG.**
**CO. LTD. No. 2346, Oaza Fujita Yahatanishi-ku**
**Kitakyushu-shi Fukuoka-ken (JP)**
Inventor: **Oshiyama, Tsutomu c/o Yasukawa**
**Electric MFG.**
**CO., LTD. No. 2346, Oaza Fujita Yahatanishi-ku**
**Kitakyushu-shi Fukuoka-ken (JP)**

(74) Representative: **Kraus, Walter, Dr. et al**
**Patentanwälte Kraus Weisert & Partner Thomas-**
**Wimmer-Ring 15**
**D-8000 München 22 (DE)**

Courier Press, Leamington Spa, England.

## Description

This invention relates to a process for forming a ceramic-like insulation of a coil for an electric apparatus in which an insulation wire is wound to form a coil which is then impregnated with an impregnant comprising a suspension of an organo-silicon compound and a mica material in an organic solvent followed by curing at a temperature not lower than 300°C.

An insulation of a coil for rotary electric apparatus and the like has sometimes been formed by placing an insulating layer of tapes or sheets mainly consisting of synthetic resin or natural mica along an inner surface of a slot adapted to receive the coil, accommodating the conductive coil of an insulated and wound wire into the slot with mounting of a wedge and then impregnating the resultants with an impregnant of a suspension of a natural laminated mica in a solvent of organo-silicon compound thereby to fill up gaps formed between the coil and the insulating layer as well as the inner gaps of the coil. In such an insulation, however, the organo-silicon compound is thermally degradated in an atmosphere of an elevated temperature above 300°C with undesired loss of the bonding ability between the filled insulating medium and the insulating layer and thus with reduction of the mechanical and dielectric strengths.

CH—A—581 401 describes the use of a mica material for preparing an impregnant used for the production of an insulation of a coil for electric apparatuses. The use of organo-silicon compounds together with ceramic-forming fillers is described in GB—A—2 046 771.

Römpps Chemie-Lexikon, 8th Ed., Franckh'sche Verlangshandlung, Stuttgart, *1981*, page 1500, right column and Holleman-Wibert, Lehrbuch der anorganischen Chemie, Walter de Gruyten & Co, Berlin, 1967, page 380 teach synthetic fluoro-mica but these documents do not suggest the utilization of the synthetic fluoro-mica for preparing an impregnating agent for insulation of an electric apparatus.

The object of the invention is to eliminate the disadvantage of the conventional insulation described hereinbefore and to achieve an improvement thereof by providing an insulation of coil which may be used in an atmosphere of an elevated temperature above 300°C with negligible reduction of the mechanical and dielectric strengths.

According to the present invention, this object is achieved in a process for forming a ceramic-like insulation of a coil for an electric apparatus in which an insulation wire is wound to form a coil which is then impregnated with an impregnant comprising a suspension of an organo-silicon compound and a mica material in an organic solvent followed by curing at a temperature not lower than 300°C which is characterized in that the mica material consists of synthetic fluoro-mica particles having a length of not more than 5 μm with a diameter of 0.1 to 5 μm and the weight ratio of synthetic fluoro-mica in a solvent of organo-silicon compound is not less than 1:1 together with an organic solvent.

The coil of the insulated wire may be a coil for an electric motor or a coil for an electric transformer.

The impregnated and cured material of the impregnant may be preheated to not lower than 300°C to provide a ceramic compound or made into a ceramic compound when used in an atmosphere of an elevated temperature of not lower than 300°C. Further, the impregnant is prepared by suspending small pieces of synthetic fluoro-mica having a length of not more than 5 μm with a diameter of 0.1 to 5 μm in a solvent of organo-silicon compound in a weight ratio of not less than 1:1 together with an organic solvent. The organic solvent may be of a mixed solvent of xylene, butylcellosolve and cellosolve acetate.

The insulation of the coil for the electric apparatus according to the invention is substantially comprised of an iron core, a slot formed in the iron core, an insulating sheet for earth of a double sided laminated mica sheet which is circumferentially placed in the slot, an interphase insulating sheet of a laminated mica plate, conductive coils placed in the insulating sheet with separation through an insulating sheet and a wedge member for supporting the elements. The conductive coils may preferably be coated with nickel.

One way of carrying out the invention is described in detail below with reference to the drawing which illustrate the preferred embodiments, in which:—

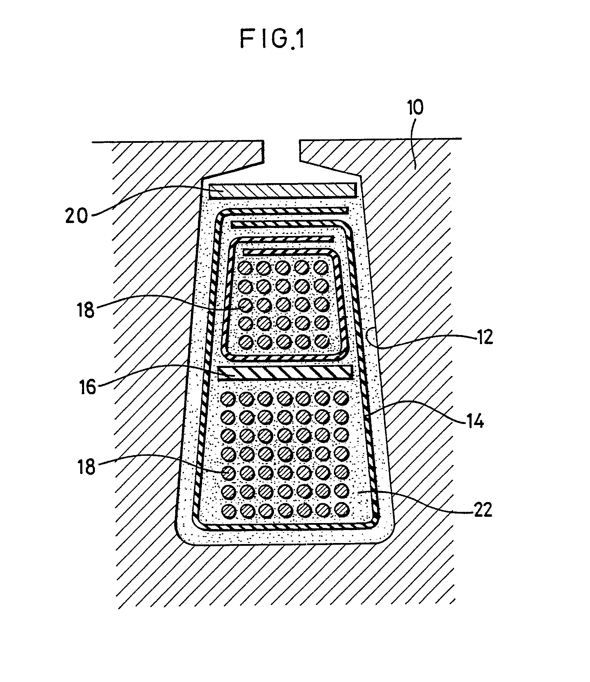

Figure 1 shows a sectional side view of an insulation of a coil for the electric apparatus according to the present invention.

In the drawing, an insulation of a coil for the electric apparatus according to the invention is comprised of an iron core 10, a slot 12 formed in the iron core 10, an insulating sheet for earth of a double-sided laminated mica sheet 14 which is circumferentially placed in the slot 12, an interphase insulating sheet of a laminated mica plate 16, conductive coils 18, 18 placed in the insulating sheet 14 with separation through an insulating sheet 16 and a wedge member 20. The conductive coils are preferably made of copper wire, the surface of which is coated with nickel for protection from the thermal oxidation.

An impregnant 22 may be prepared by suspending small pieces of synthetic fluoro-mica having a length of not more than 5 μm with a diameter of 0.1 to 5 μm in a solvent of organo-silicon compound in a weight ratio of not less than 1:1 together with an organic solvent such as a mixed solvent of xylene, butylcellosolve and cellosolve acetate, followed by impregnation and curing. Thus impregnated and cured material is further heated to not lower than 300°C or used in the atmosphere of an elevated temperature not lower than 300°C, thereby to vaporize some fluoro-compound such as $SiF_4$, KF and the like, from the synthetic fluoro-mica, which is combined with siloxane derived from the organo-silicon compound thereby to provide a ceramic formation.

Now referring to an embodiment of an insulation of the coil for 22 KW motor, the iron core into the slot 12 of which are inserted the insulating sheet for earth 14, the interphase insulating sheet 16, the conductive coil 18 and the wedge member 20 is preheated at 120°C to remove moisture of each material. Thereafter, the iron core is cooled to 40—50°C and is then immersed in the organo-silicon solvent containing the suspended synthetic fluoro-mica for approximately 10 minutes for subsequent drying in air for about one hour and thereafter drying at about 80°C for two hours. Further, dryness takes place at about 120°C for 2

hours to remove the solvent and then heated at not lower than 200°C for 2 hours with curing.

The following table shows the comparison of the insulation of a coil according to the invention with an insulated coil impregnated with TEFRON (trade mark) material, showing the fact that exposure of the heat-resistant coil insulation with the TEFRON material to 400°C for about 1300 hours reduces greatly the dielectric strength of insulation with loss of the function of the apparatus, whereas no reduction of the dielectric strength may be seen in the insulation of a coil according to the invention as compared with the originals, even after being exposed to 400°C for 1400 hours.

(Unit : KV)

| | Insulation according to the invention | | Coil insulated with TEFRON Material | |
|---|---|---|---|---|
| | Initial | After use at 400°C for 1400 hrs. | Initial | After use at 400°C for 1300 hrs. |
| Dielectric Strength between phases | 3.95 | 3.92 | 3.45 | 1.04 |
| Dielectric Strength for earth | 3.80 | 4.32 | 4.80 | 0.90 |

As described hereinbefore, in accordance with the invention a coil is impregnated with the impregnant having suspended the synthetic fluoro-mica in the solvent of the organo-silicon compound which is then cured. In the atmosphere of high temperature, the fluoro-compound vaporized from the synthetic fluoro-mica is combined with the siloxane decomposed from the organosilicon compound thereby to provide the ceramic formation, thus resulting in the excellent properties in the mechanical and dielectric strength of the insulation as well as the absence of thermal degradation in the high temperature. Especially in the insulation of the coil for the rotary electric apparatus, the impregnation within the slot may be adequately ensured due to the small particle size of the synthetic fluoro-mica so that any failure or damage of the insulated coil through vibration or impact may be avoided.

While the insulation of the conductive coil for the rotary electric apparatus has been described hereinbefore with reference to the appended drawing, it will still be appreciated that the invention should not be limited thereto but applicable to the insulation of the conductive coil for a transformer, and that the impregnation may be performed by spraying application, molding or others in place of the immersion employed in the embodiment.

**Claims**

1. A process for forming a ceramic-like insulation (22) of a coil for an electric apparatus in which an insulation wire is wound to form a coil (18) which is then impregnated with an impregnant comprising a suspension of an organo-silicon compound and a mica material in an organic solvent followed by curing at a temperature not lower than 300°C, characterized in that the mica material consists of synthetic fluoro-mica particles having a length of not more than 5 µm with a diameter of 0.1 to 5 µm and the weight ratio of synthetic fluoro-mica in a solvent of organo-silicon compound is not less than 1:1 together with an organic solvent.

2. A process according to claim 1, characterized in that the impregnated and cured material (22) of the impregnant is preheated to not lower than 300°C, before actual use of the electric apparatus at said high temperature, for providing the ceramic-like insulation (22).

3. A process according to claim 1, characterized in that the ceramic-like insulation (22) is provided by actual use of the electric apparatus in the atmosphere not lower than 300°C.

**Revendications**

1. Procédé pour former une isolation (22) analogue à une céramique, d'un bobinage pour un appareil électrique dans lequel un fil isolé est enroulé pour former un bobinage (18) qui est ensuite imprégné avec un agent d'imprégnation constitué par une suspension d'un composé organo-silicium et d'une matière contenant du mica dans un solvant organique, cuit ensuite à une température non inférieure à 300°C, caractérisé en ce que la matière contenant du mica consiste en des particules de fluoro-mica synthétique ayant une longueur non supérieure à 5 μm et un diamètre de 0,1 à 5 μm, le rapport en poids du fluoro-mica synthétique dans un solvant d'un composé organo-silicium n'est pas inférieur à 1:1 avec un solvant organique.

2. Procédé suivant la revendication 1, caractérisé en ce que la matière (22) imprégnée et cuite de l'agent d'imprégnation est pré-chauffée à une température non inférieure à 300°C avant l'utilisation de l'appareil électrique à ladite température élevée, pour réaliser l'isolation (22) analogue à une céramique.

3. Procédé suivant la revendication 1, caractérisé en ce que l'isolation (22) analogue à une céramique est réalisée par l'utilisation réelle de l'appareil électrique dans une atmosphère à une température non inférieure à 300°C.

**Patentansprüche**

1. Verfahren zur Erzeugung einer keramikartigen Isolierung (22) einer Spule für eine elektrische Vorrichtung, wobei der Isolierdraht unter Bildung einer Spule (18) aufgeweckelt wird, welche dann mit einem Imprägniermittel, das eine Suspension aus einer Organosiliciumverbindung und einem Glimmermaterial in einem organischen Lösungsmittel enthält, imprägniert wird und anschließend bei einer Temperatur nicht unter 300°C gehärtet wird, dadurch gekennzeichnet, daß das Glimmermaterial synthetische Fluorglimmerteilchen mit einer Länge von nicht mehr als 5 μm, mit einem Durchmesser von 0,1 bis 5 μm enthält, und daß das Gewichtsverhältnis von synthetischem Fluorglimmer in dem Lösungsmittel zu organischer Siliciumverbindung nicht unter 1:1 zusammen mit dem organischen Lösungsmittel liegt.

2. Verfahren nach Anspruch 1, dadurch gekennzeichnet, daß das mit dem Imprägniermittel imprägnierte und gehärtete Material (22) auf eine Temperatur nicht unter 300°C vor der tatsächlichen Verwendung der elektrischen Vorrichtung bei höherer Temperatur vorerhitzt wird, damit eine keramikartige Isolierung (22) erzeugt wird.

3. Verfahren nach Anspruch 1, dadurch gekennzeichnet, daß die Keramikartige Isolierung (22) bei der tatsächlichen Verwendung der elektrischen Vorrichtung in der Atmosphäre nicht unter 300°C erzeugt wird.

# FIG.1